Europäisches Patentamt

(19) European Patent Office

Office européen des brevets

(11) Numéro de publication: **0 101 392**
A1

# (12) DEMANDE DE BREVET EUROPEEN

(21) Numéro de dépôt: 83420133.7

(22) Date de dépôt: 21.07.83

(51) Int. Cl.³: **B 23 Q 37/00**
B 23 Q 1/00, B 27 F 5/02

(30) Priorité: 05.08.82 FR 8214025

(43) Date de publication de la demande:
22.02.84 Bulletin 84/8

(84) Etats contractants désignés:
AT BE CH DE GB IT LI LU NL SE

(71) Demandeur: LYON-FLEX ETS PROST-DAME (Société Anonyme)
94 à 100 rue Baraban
F-69003 Lyon(FR)

(72) Inventeur: Rogemond, André
9, rue Pascal
F-69100 Villeurbanne(FR)

(72) Inventeur: Alibert, Roger
39, rue Louis Armand
F-69680 Chassieu(FR)

(72) Inventeur: Basset, Pierre
140 rue du 8 Mai 1945
F-69100 Villeurbanne(FR)

(74) Mandataire: Maureau, Pierre
Cabinet GERMAIN & MAUREAU B.P. 11
F-69392 Lyon Cedex 03(FR)

(54) **Machine à mortaiser.**

(57) Cette machine, destinée principalement au travail du bois, comprend un bâti (1) à l'intérieur duquel est logé un bloc-moteur (3) et sur lequel est montée une tête porte-outil interchangeable (4, 4', 4") l'outil de mortaisage (7, 7', 7") (7) qui travaille dans un plan incliné (2) pouvant être un bédane (7), une chaîne sans fin coupante (7'), ou une mèche (7"). Le bâti (1) comporte des colonnes de guidage (9), perpendiculaires au plan de travail (2), pour un chariot (10) dont le déplacement est commandé au moyen d'un volant (12). Le chariot (10) supporte des guides inclinés (13) parallèles au plan de travail (2), pour une table mobile (24) également déplaçable transversalement qui reçoit la pièce (26) sur laquelle doit être exécutée une mortaise. Un levier (15) commande le déplacement de la table (24) en direction de l'outil (7, 7', 7"), pour que celui-ci pénètre dans la pièce (26).

FIG. 2

EP 0 101 392 A1

1

# MACHINE A MORTAISER

La présente invention concerne une machine à mortaiser, principalement pour le travail du bois, cette machine étant polyvalente en ce sens qu'elle permet l'exécution de mortaises dans des pièces de bois par des procédés d'usinage divers : bédane, chaîne sans fin coupante, mèche, etc.

Les mortaiseuses actuelles sont des machines recevant un type donné d'outil tel que bédane, chaîne, mèche, aucune interchangeabilité de l'outil de mortaisage n'étant prévue. De plus, ces machines ne possèdent généralement pas une disposition ergonomique, du point de vue de la visibilité sur le travail en cours et de l'accessibilité aux divers moyens de commande et de réglage par l'opérateur.

L'invention élimine ces inconvénients, en fournissant une machine à mortaiser qui :

- d'une part, possède une configuration d'ensemble très différente de celle des mortaiseuses existantes  et procurant des qualités ergonomiques remarquables ;

- d'autre part,  offre la possibilité d'adapter, sur une même machine de base, divers dispositifs de mortaisage interchangeables.

A cet effet, l'invention a pour objet une machine à mortaiser dont le bâti, à l'intérieur duquel est logé un bloc-moteur et sur lequel est montée une tête porte-outil fixe en cours d'utilisation, supportant un outil de  mortaisage disposé et travaillant dans un plan incliné sur l'horizontale,  comporte des moyens de guidage en translation suivant une direction perpendiculaire au plan de travail, d'un chariot qui lui-même possède des moyens de guidage en translation, inclinés sur l'horizontale et parallèles au plan de travail, pour une table mobile également déplaçable transversalement et destinée à recevoir la pièce sur laquelle doit être exécutée une mortaise, des moyens de commande étant prévus pour déplacer le chariot perpendiculairement au plan de tra-

2

vail, pour déplacer la table dans le plan de travail, en direction de l'outil de mortaisage, et pour déplacer cette table transversalement.

Le bâti à l'intérieur duquel est logé le bloc-moteur d'entraînement reçoit, sur sa partie supérieure inclinée, une tête porte-outil qui est de préférence commodément amovible et interchangeable grâce à un système d'accouplement et de verrouillage simple, rapide et efficace, mais qui reste fixe en cours d'utilisation, d'où : facilité de protection de la tête et de l'outil, meilleure rigidité, et élimination de certains problèmes de vibrations. La disposition inclinée du plan de travail, matérialisé par la face supérieure de la table sur laquelle est posée la pièce à usiner, apporte de nombreux avantages :

- excellente visibilité sur le travail en cours ;
- dégagement "naturel" des copeaux ;
- positionnement simple et précis des pièces à usiner, maintenues sans difficulté par gravité dans un "V" ouvert vers le haut qui est défini par la table de travail et par des butées situées près du bord horizontal inférieur de cette table.

Le bâti, le bloc-moteur, le chariot, et la table de la machine constituent des parties communes. Seules des têtes adaptables et interchangeables modifient le mode de travail de la machine, qui, selon le cas, devient une mortaiseuse à bédane, une mortaiseuse à chaîne sans fin coupante, ou une mortaiseuse à mèche, l'outil travaillant toujours dans un plan incliné sur l'horizontale.

Une telle machine pourra satisfaire un marché plus large et surtout évolutif, puisque l'acheteur pourra parfaitement acquérir au départ une machine équipée en une seule version, par exemple "chaîne", et la compléter par la suite par les équipements "bédane" ou "mèche", par acquisition des têtes séparées correspondantes.

Le déplacement du chariot, pouvant être commandé manuellement à partir d'un volant et par l'intermédiaire

3

d'un mécanisme à vis, permet de faire varier la distance entre le plan de la table et le plan incliné dans lequel travaille l'outil, selon l'épaisseur de la pièce à usiner et la position désirée de la mortaise à réaliser sur cette pièce. Le déplacement de la table dans le plan de travail incliné, en direction de l'outil de mortaisage, peut être commandé manuellement, à partir d'un levier et par l'intermédiaire d'un arbre et de bras articulés, ce déplacement permettant la pénétration de l'outil dans la pièce à usiner jusqu'à la profondeur de mortaise souhaitée, laquelle sera avantageusement sélectionnée au moyen d'un système de butées multiples, par exemple du type à barillet. De préférence, la table est montée coulissante sur le chariot, non pas directement, mais par l'intermédiaire d'un support, lui-même monté réglable d'avant en arrière sur des fourreaux qui coulissent sur les moyens de guidage portés par le chariot.

Le réglage de position du support relativement auxdits fourreaux, effectué par exemple à l'aide d'un volant et d'une vis, permet un ajustement initial de la distance entre l'outil de mortaisage et la table, donc entre l'outil et la pièce à usiner, en fonction du type de tête et d'outil adapté sur la machine.

Le rappel en arrière, c'est-à-dire dans le sens de l'éloignement de l'outil de mortaisage, de l'ensemble mobile constitué par la table, son support et les fourreaux, est assuré automatiquement par des ressorts de traction.

Pour guider et commander le mouvement transversal de la table, le support précité comporte des guides transversaux le long desquels est déplaçable la table, sa translation étant commandée au moyen d'un levier ; ce mouvement transversal permet, sans modifier la position sur la table de la pièce à usiner, de déplacer cette pièce relativement à l'outil si plusieurs plongées de l'outil sont nécessaires pour l'exécution d'une mortaise.

4

De toute façon, l'invention sera mieux comprise, et d'autres caractéristiques et avantages seront mis en évidence, à l'aide de la description qui suit, en référence au dessin schématique annexé représentant, à titre d'exemple non limitatif, une forme de réalisation de cette machine à mortaiser :

Figure 1 est une vue en élévation de la machine à mortaiser selon l'invention ;

Figure 2 en est une vue de côté, dans le cas où cette machine est équipée d'une tête avec bédane ;

Figures 3 et 4 sont des vues partielles correspondant à figure 2, respectivement dans le cas où la même machine est équipée d'une tête avec chaîne sans fin coupante ou d'une tête avec mèche ;

Figure 5 est une vue en coupe suivant 5-5 de figure 1.

La machine représentée au dessin comprend un bâti (1) dont la partie supérieure inclinée détermine l'orientation d'un plan de travail (2), incliné sur l'horizontale d'un angle égal par exemple à 30°. A l'intérieur du bâti (1) est logé un bloc-moteur électrique d'entraînement (3), d'axe perpendiculaire au plan de travail (2), accouplé à une tête porte-outil amovible et interchangeable (4, 4' ou 4'') adaptée et verrouillée sur la partie supérieure inclinée du bâti (1). Des capots protecteurs (5, 6) également adaptés sur la partie supérieure du bâti (1) recouvrent la tête (4, 4' ou 4'') et son outil de mortaisage (7, 7', 7'').

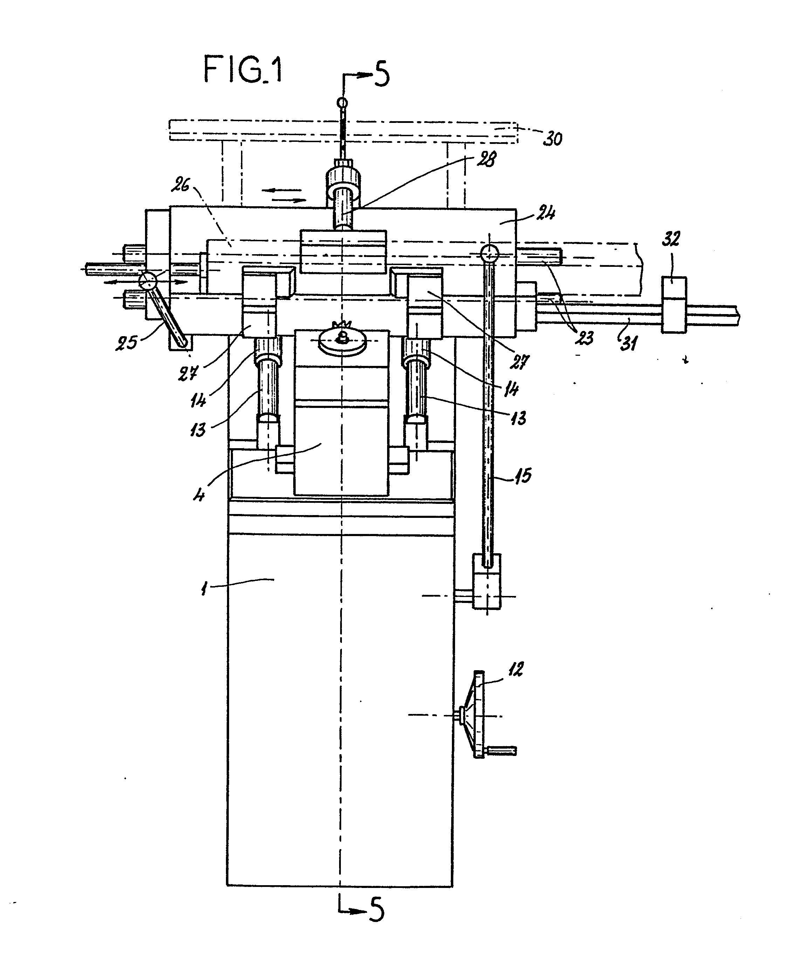

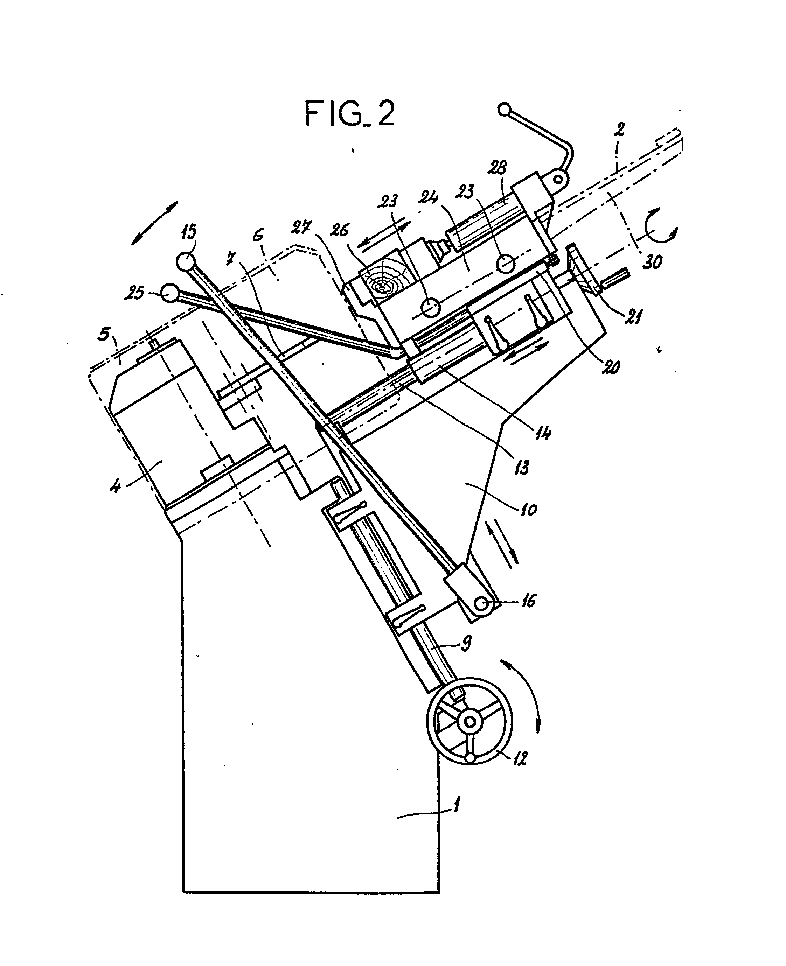

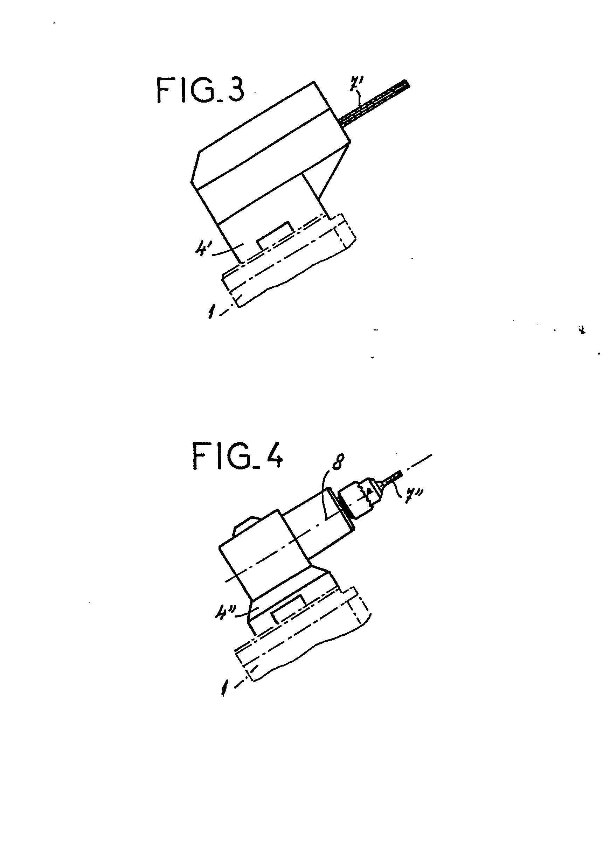

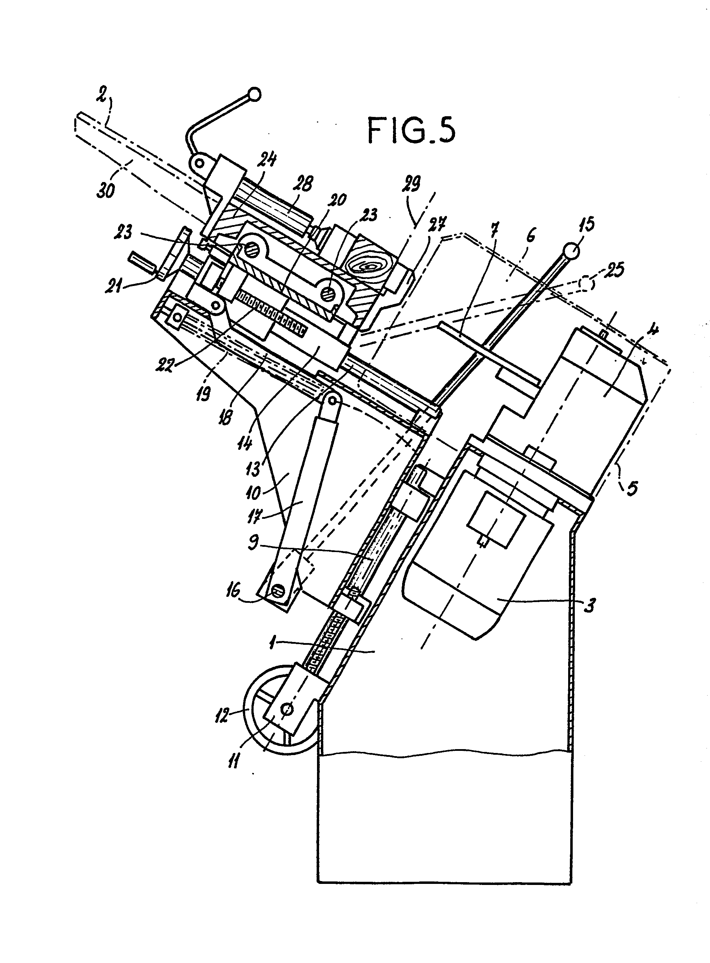

Sur la machine représentée de façon complète aux figures 1, 2 et 5, la tête porte-outil (4) est conçue pour supporter et pour entraîner, à partir du bloc-moteur (3) et par l'intermédiaire d'un mécanisme à excentrique, un bédane (7) qui oscille dans le plan de travail (2). Dans le cas de la figure 3, la même machine est équipée d'une tête porte-outil (4') prévue pour supporter et entraîner, à partir du bloc-moteur (3), une chaîne sans fin coupante (7') située et entraînée dans le plan de travail. Dans le cas de la figure 4, la même machine est équipée d'une tête (4'') conçue pour supporter et entraîner, à partir du bloc-moteur (3) et par l'intermédiaire de pignons de renvoi d'angle, une mèche (7'') dont l'axe de rotation (8) incliné sur l'horizontale est situé dans le plan de travail. Le bédane (7), la chaîne sans fin (7') et la mèche (7'') constituent des outils de mortaisage bien connus de l'homme de métier en ce qui concerne leur conformation, leur mode d'entraînement et les caractéristiques des mortaises qu'ils permettent d'obtenir.

Sur le bâti (1) sont montées deux colonnes de guidage (9), perpendiculaires au plan de travail (2), le long desquelles est monté coulissant un chariot (10). Un mécanisme à vis (11), commandé par un volant (12) situé sur un côté de la machine, permet de déplacer le chariot (10) le long des colonnes (9).

Le chariot (10) supporte deux guides (13), inclinés et parallèles au plan de travail (2). Sur ces guides (13) sont montés coulissants deux fourreaux (14), reliés entre eux, dont le déplacement est commandé à l'aide d'un levier (15) porté par un arbre horizontal (16), et par l'intermédiaire de deux bras articulés (17, 18). L'ensemble constitué par les deux fourreaux (14) et les parties supportées par ceux-ci est repoussé et maintenu dans la position la plus éloignée de l'outil (7) par deux ressorts de traction (19), plusieurs valeurs de tension étant possibles à l'aide d'un système à excentrique agissant sur la longueur desdits ressorts (19). Le déplacement des fourreaux (14) en direction de l'outil (7) peut être arrêté en diverses positions présélectionnées grâce à un système de butées multiples.

Sur les fourreaux (14) est monté coulissant un support (20) déplaçable d'avant en arrière dans le plan de travail (2) à l'aide d'un volant (21) et d'une vis (22). Sur le support (20) sont montés deux guides transversaux (23), le long desquels est déplaçable une table (24) inclinée de manière à se trouver dans le plan de

6

travail (2), la translation de la table (24) étant commandée au moyen d'un levier (25). La course de la table (24) est limitée par un système de butées mécaniques réglables.

La pièce de bois (26) sur laquelle doit être exécutée une mortaise est posée sur la table (24), et retenue par des butées (27) contre lesquelles eÎle est appliquée par un ou plusieurs presseurs (28), les butées (27) définissant un plan de référence incliné (29) perpendiculaire au plan de travail (2). Une face de la pièce de bois (26) se trouve ainsi positionnée en regard de l'outil (7).

Le déplacement du chariot (10), commandé à partir du volant (12). permet de faire varier la distance entre le plan de la table (24) et le plan incliné contenant l'outil (7). L'autre volant (21), déplaçant d'avant en arrière le support (20) par rapport aux fourreaux (14), assure le réglage de la distance entre l'extrémité de l'outil (7) et la table (24), en fonction des différents types de têtes (4, 4', 4") et d'outils (7, 7', 7").

La pénétration de l'outil dans la pièce de bois (26) est commandée par l'action sur le levier (15), la profondeur atteinte par l'outil étant déterminée par le système de butées multiples. Enfin, le levier (25) sert à déplacer la table (24) transversalement dans le cas où plusieurs plongées de l'outil (7) sont nécessaires pour l'obtention d'une mortaise.

Un support spécial (30), adaptable sur le bord horizontal supérieur de la table (24) et prolongeant celle-ci dans la direction opposée à l'outil (7), autorise le mortaisage de plaques de bois de grandes dimensions, par exemple pour la fabrication des portes isoplanes, tout en maintenant le centre de gravité de la pièce à usiner à l'intérieur du périmètre d'appui. Dans ce cas, le presseur (28) est déplacé et agit perpendiculairement au plan de travail (2).

7

Pour soutenir des pièces à mortaiser de grande longueur, la table (24) peut aussi être prolongée latéralement par des règles amovibles (31), qui s'adaptent sur les côtés de cette table et sont munies de butées escamotables (32) - voir figure 1.

Grâce à la disposition ergonomique de la machine à mortaiser décrite précédemment et notamment à l'inclinaison de son plan de travail (2), l'opérateur dispose d'une bonne visibilité sur le travail en cours, ainsi que d'une accessibilité parfaite aux leviers de commande (15, 25) et à toutes les butées de positionnement. De plus, par suite de l'inclinaison du plan de travail (2), le dégagement des copeaux s'effectue "naturellement", par gravité, ce qui facilite leur évacuation par un dispositif de captation.

La machine à mortaiser manuelle représentée sur les figures s'adresse principalement aux besoins de l'artisanat et des petites entreprises, dans le domaine de la menuiserie en général et du meuble en particulier.

A partir de cette conception de base peuvent être conçues des machines à mortaiser plus complexes et plus évoluées :

- machines semi-automatiques avec systèmes oléopneumatiques ou autres,

- machines à commande numérique avec programmation donnant toutes possibilités de mortaisage et de réglage,

- machines multi-têtes ayant une capacité de production plus importante.

8

REVENDICATIONS

1.- Machine à mortaiser, principalement pour le travail du bois, caractérisée en ce que son bâti (1), à l'intérieur duquel est logé un bloc-moteur (3) et sur lequel est montée une tête porte-outil (4, 4', 4") fixe en cours d'utilisation, supportant un outil de mortaisage (7, 7', 7") disposé et travaillant dans un plan (2) incliné sur l'horizontale, comporte des moyens de guidage en translation (9), perpendiculaires au plan de travail (2), d'un chariot (10) qui lui-même possède des moyens de guidage en translation (13, 14), inclinés sur l'horizontale et parallèles au plan de travail (2) pour une table mobile (24) également déplaçable transversalement et destinée à recevoir la pièce (26) sur laquelle doit être exécutée une mortaise, des moyens de commande (11, 12 ; 15 à 18 ; 25) étant prévus pour déplacer le chariot (10) perpendiculairement au plan de travail (2), pour déplacer la table (24) dans le plan de travail (2) en direction de l'outil de mortaisage (7, 7', 7"), et pour déplacer cette table (24) transversalement.

2.- Machine à mortaiser selon la revendication 1, caractérisée en ce que la tête porte-outil (4, 4', 4"), montée sur la partie supérieure inclinée du bâti (1), est amovible et interchangeable.

3.- Machine à mortaiser selon la revendication 2, caractérisée en ce qu'elle est équipée d'une tête (4) conçue pour supporter et entraîner un bédane (7) oscillant dans le plan de travail incliné (2).

4.- Machine à mortaiser selon la revendication 2, caractérisée en ce qu'elle est équipée d'une tête (4') conçue pour supporter et entraîner une chaîne sans fin coupante (7'), située et entraînée dans le plan de travail incliné (2).

5.- Machine à mortaiser selon la revendication 2, caractérisée en ce qu'elle est équipée d'une tête (4") conçue pour supporter et entraîner une mèche (7") dont

9

l'axe de rotation (8) incliné sur l'horizontale est situé dans le plan de travail (2).

6.- Machine à mortaiser selon l'une quelconque des revendications 1 à 5, caractérisée en ce que les moyens de commande pour le déplacement du chariot (10), le long de ses moyens de guidage (9) perpendiculaires au plan de travail incliné (2), sont constitués par un mécanisme à vis (11) commandé par un volant (12).

7.- Machine à mortaiser selon l'une quelconque des revendications 1 à 6, caractérisée en ce que les moyens de commande pour le déplacement de la table (24) dans le plan de travail incliné (2) en direction de l'outil de mortaisage (7, 7', 7") sont constitués par un levier (15) et par un ensemble de bras articulés (17, 18).

8.- Machine à mortaiser selon l'une quelconque des revendications 1 à 7, caractérisée en ce que le déplacement de la table (24) dans le plan de travail incliné (2), en direction de l'outil de mortaisage (7, 7', 7"), est arrêté dans des positions présélectionnées au moyen d'un système de butées multiples.

9.- Machine à mortaiser selon l'une quelconque des revendications 1 à 8, caractérisée en ce que la table (24) recevant la pièce (26) sur laquelle doit être exécutée la mortaise est montée coulissante sur le chariot (10) par l'intermédiaire d'un support (20), lui-même réglable d'avant en arrière sur des fourreaux (14) qui coulissent sur les moyens de guidage (13) portés par le chariot (10).

10.- Machine à mortaiser selon la revendication 9, caractérisée en ce que le réglage de position du support précité (20) relativement aux fourreaux (14) est effectué à l'aide d'un volant (21) et d'une vis (22).

11.- Machine à mortaiser selon la revendication 9 ou 10, caractérisée en ce que le rappel en arrière, c'est-à-dire dans le sens de l'éloignement de l'outil de mortaisage (7, 7', 7"), de l'ensemble mobile consti-

10

tué par la table (24), son support (20) et les fourreaux (14) est assuré par des ressorts de traction (19).

12.- Machine à mortaiser selon l'une quelconque des revendications 9 à 11, caractérisée en ce que le support précité (20) comporte des guides transversaux (23) le long desquels est déplaçable la table (24), les moyens de commande pour le déplacement transversal de cette table étant constitués par un levier (25).

13.- Machine à mortaiser selon l'une quelconque des revendications 1 à 12, caractérisée en ce que la table (24) comporte, près de son bord horizontal inférieur, des butées de retenue (27) pour la pièce (26) sur laquelle doit être exécutée une mortaise, ces butées (27) définissant un plan de référence incliné (29) perpendiculaire au plan de travail (2).

14.- Machine à mortaiser selon la revendication 13, caractérisée en ce que sont prévus, sur la table (24), un ou plusieurs presseurs (28) aptes à appliquer la pièce (26) sur laquelle doit être exécutée une mortaise contre les butées précitées (27).

15.- Machine à mortaiser selon l'une quelconque des revendications 1 à 14, caractérisée en ce qu'un support (30), adaptable sur le bord horizontal supérieur de la table (24), est prévu pour prolonger celle-ci dans la direction opposée à l'outil de mortaisage (7, 7', 7").

16.- Machine à mortaiser selon l'une quelconque des revendications 1 à 15, caractérisée en ce que sont prévues des règles amovibles (31), adaptables sur les côtés de la table (24) pour prolonger celle-ci latéralement.

FIG.1

0101392

# FIG. 2

FIG. 3

FIG. 4

# FIG.5

**0101392**

Office européen
des brevets

**RAPPORT DE RECHERCHE EUROPEENNE**

Numéro de la demande

EP  83 42 0133

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 105 404 (RIGHI) <br> * Figures 1,4-6 * | 1,12 | B 23 Q  37/00 <br> B 23 Q   1/00 <br> B 27 F   5/02 |
| A | FR-A-1 231 426 (LOEWE) <br> * Page 2, colonne de gauche, lignes 16-21; figures 7,8 * | 1 | |
| A | FR-A- 824 906 (HUFNAGEL) <br> * Figures * | 1 | |
| A | MACHINERY AND PRODUCTION ENGINEERING, vol. 129, no. 3330, 6 octobre 1976, pages 404-408, Burgess Hill, Sussex, G.B. "Development of an ergonomic lathe" * Figure 4 * | | |
| A | WERKSTATTSTECHNIK, vol. 53, no. 12, décembre 1963, pages 642-644, Berlin, DE. <br> G. MATTHEE: "Die Leistungsschau des Drehmaschinenbaus" * Page 643 * | | B 23 B <br> B 23 Q <br> B 27 F |
| A | DE-C- 174 399 (FRANKFURTER MASCHINENFABRIK AG) | | |
| A | FR-A-1 580 335 (PROST-DAME) | | |

---      -/-

DOMAINES TECHNIQUES RECHERCHES (Int. Cl. 3)

Le présent rapport de recherche a été établi pour toutes les revendications

| Lieu de la recherche <br> LA HAYE | Date d'achèvement de la recherche <br> 07-11-1983 | Examinateur <br> ROSENBAUM H.F.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

**RAPPORT DE RECHERCHE EUROPEENNE**

| | DOCUMENTS CONSIDERES COMME PERTINENTS | | Page 2 |

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-1 723 338 (EDMOND) | | |
| | ----- | | |
| | | | |
| | | | **DOMAINES TECHNIQUES RECHERCHES (Int. Cl. ³)** |

*Le présent rapport de recherche a été établi pour toutes les revendications*

| Lieu de la recherche LA HAYE | Date d'achèvement de la recherche 07-11-1983 | Examinateur ROSENBAUM H.F.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82